# FASCICULE DE BREVET EUROPEEN

(11) **EP 3 250 852 B1**
(45) Date de publication et mention de la délivrance du brevet: **21.09.2022**
(21) Numéro de dépôt: 16702114.6
(22) Date de dépôt: 29.01.2016
(51) Int. Cl.: F21S 45/30, F21S 45/50, F21V 31/00, F21V 31/03

(54) **DISPOSITIF D'ÉCLAIRAGE ET/OU DE SIGNALISATION POUR VÉHICULE AUTOMOBILE ET PROCÉDÉ DE FABRICATION**
BELEUCHTUNGS- UND/ODER SIGNALISIERUNGSVORRICHTUNG FÜR EIN KRAFTFAHRZEUG UND HERSTELLUNGSVERFAHREN
LIGHTING AND/OR SIGNALLING DEVICE FOR A MOTOR VEHICLE AND MANUFACTURING METHOD

(30) Priorité: 29.01.2015 FR 1550685
(43) Date de publication de la demande: 06.12.2017
(73) Titulaire: Valeo Vision, 93012 Bobigny Cedex (FR)
(72) Inventeur: GODBILLON, Vincent, 93012 Bobigny Cedex (FR); ALBOU, Pierre, 93012 Bobigny Cedex (FR); BRASSIER, Marc, 93012 Bobigny Cedex (FR)
(74) Mandataire: Valeo Visibility
(86) Numéro de dépôt international: PCT/EP2016/051960
(87) Numéro de publication internationale: WO 2016/120459

(56) Documents cités:
- EP-A2- 0 859 188
- WO-A2-2010/104552
- DE-A1-102005 044 446
- DE-A1-102013 213 542
- US-A1- 2009 059 594

## Description

L'invention concerne un dispositif d'éclairage et/ou de signalisation pour véhicule automobile, tels qu'un projecteur ou un feu arrière, comportant un boîtier, une glace et un système optique ainsi que son procédé de fabrication.

Le boîtier, fermé par la glace, ménage une chambre interne close qui loge le système optique. Le dispositif est généralement réalisé de manière à être étanche à l'encontre de l'infiltration d'eau et, d'une manière générale, d'éléments polluants liquides ou solides qui pourraient dégrader le système optique et/ou la qualité de l'éclairage.

Une étanchéité totale n'est toutefois pas souhaitable. En effet, la pression interne dans la chambre est susceptible de varier du fait des changements de température intérieure induits par les réchauffements et refroidissements répétés du système optique, selon que celui-ci est en marche ou à l'arrêt. Pour éviter toute déformation du dispositif, il convient donc d'équilibrer la pression entre l'intérieur et l'extérieur du dispositif en laissant passer l'air. Il en résulte que de l'air chargé d'humidité est susceptible de pénétrer dans la chambre. Lorsque la température de l'air contenu dans la chambre, soumis à une pression et une humidité données, atteint son point de rosée, il se produit la formation de gouttelettes d'eau, par condensation. Ce phénomène est récurrent et a pour effet de dégrader la qualité de l'éclairage et de produire un aspect inesthétique.

Il existe différentes techniques pour gérer l'humidité à l'intérieur du boîtier.

Une première technique connue consiste à appliquer un vernis hydrophile, apte à empêcher la formation de gouttelettes d'eau car il génère la création d'un film d'eau uniforme et d'épaisseur homogène, sur certaines surfaces, à l'intérieur de la chambre, par exemple sur la face interne de la glace. Ainsi, l'aspect esthétique est préservé.

Une deuxième technique connue consiste à doter le dispositif d'un système de ventilation qui fait circuler en permanence l'air entre l'intérieur et l'extérieur du dispositif de manière à éviter une accumulation d'humidité à l'intérieur de la chambre.

Ces deux techniques peuvent être utilisées indépendamment l'une de l'autre ou de façon complémentaire. Le document WO 2010/104552 propose de déposer une couche rapportée telle qu'un film sur le matériau polymère d'un boitier afin de créer un barrière étanche.

La présente invention propose d'améliorer encore la situation.

A cet effet, l'invention concerne un dispositif d'éclairage et/ou de signalisation pour véhicule automobile, comportant une chambre interne logeant un système optique et au moins un élément en matériau polymère ayant une surface orientée vers l'intérieur de la chambre, remarquable en ce que ladite surface orientée vers l'intérieur de la chambre est munie d'une couche étanche formant barrière à l'encontre du passage de molécules d'eau vers l'intérieur de la chambre. Selon l'invention, la couche étanche est une couche surfacique de l'élément en matériau polymère, réticulée par exposition à un bombardement ionique de manière à être rendue étanche à l'encontre du passage de molécules d'eau.

Un élément, ou pièce, en matériau polymère présente une certaine porosité, ou perméabilité, vis-à-vis de l'eau. Lorsqu'il est en contact avec de l'eau liquide ou avec de l'air chargé d'humidité, l'élément a tendance à absorber de l'eau, laquelle est susceptible de ressortir ultérieurement. Prenons l'exemple d'un boîtier de dispositif d'éclairage et/ou de projection de véhicule automobile, dont les parois sont réalisées en matériau polymère. Du fait de l'humidité présente dans l'environnement intérieur et/ou extérieur du boîtier, des molécules d'eau pénètrent à l'intérieur des parois du boîtier, par les faces externes et/ou internes de celles-ci. Cette eau absorbée ressort ultérieurement des parois, potentiellement vers l'intérieur du boîtier, ce qui augmente encore davantage l'humidité à l'intérieur du boîtier. Grâce à l'invention, l'eau ayant pénétré les parois du boîtier est empêchée de ressortir vers l'intérieur du boîtier et forcée de s'évacuer vers l'extérieur.

Avantageusement, la couche étanche est en contact avec l'intérieur de la chambre et la surface de l'élément en matériau polymère orientée vers l'intérieur de la chambre constitue une surface commune à l'élément en matériau polymère et à la couche étanche. En définitive, la couche étanche est intercalée directement entre l'intérieur de la chambre et le matériau polymère.

L'élément en matériau polymère peut être une paroi d'un boîtier délimitant ladite chambre ou un tuyau de circulation d'un liquide de refroidissement.

Selon une variante de réalisation, le dispositif comprend en outre un élément de déshumidification adapté pour extraire l'humidité de l'air avant que celui-ci ne pénètre dans la chambre par une ouverture communiquant entre l'intérieur de la chambre et l'extérieur.

Selon une autre variante de réalisation, cumulative ou alternative, le dispositif comprend un élément de ventilation adapté pour faire circuler l'air entre l'intérieur de la chambre et l'extérieur.

L'invention concerne aussi un procédé de fabrication d'un dispositif d'éclairage et/ou de signalisation pour véhicule automobile, comportant une chambre interne logeant un système optique et au moins un élément en matériau polymère présentant une surface orientée vers l'intérieur de la chambre, remarquable en ce qu'il comprend une étape de traitement de la surface orientée vers l'intérieur de la chambre pour réaliser une couche étanche formant barrière à l'encontre du passage de molécules d'eau vers l'intérieur de la chambre, l'étape de traitement comprenant un bombardement ionique de la surface de l'élément en matériau polymère orientée vers l'intérieur de la chambre afin de réaliser une couche surfacique étanche dans l'élément en matériau polymère.

L'invention sera mieux comprise à l'aide de la description suivante de deux exemples de réalisation du dispositif d'éclairage et/ou de signalisation pour véhicule automobile et de deux modes de réalisation particuliers du procédé de fabrication du dispositif, en référence aux dessins annexés sur lesquels:
- La figure 1 représente un premier exemple de réalisation du dispositif de l'invention ;
- La figure 2 représente un deuxième exemple de réalisation du dispositif de l'invention.

D'emblée, on notera que les éléments correspondants représentés sur les différentes figures portent les mêmes références, sauf indication contraire.

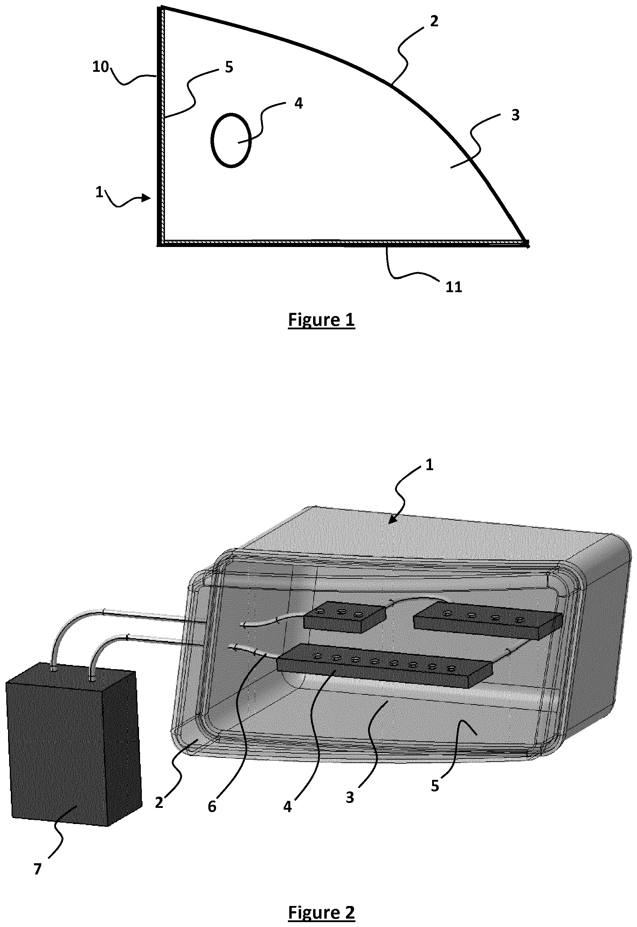

Sur la figure 1, on a représenté, de façon schématique, un dispositif d'éclairage et/ou de signalisation pour véhicule automobile, selon un premier exemple de réalisation de l'invention.

Le dispositif d'éclairage et/ou de signalisation comprend un boîtier 1, fermé par une glace 2, une chambre interne 3 constituée par l'espace intérieur clos délimité par le boîtier 1 et par la glace 2, et un système optique 4 logé à l'intérieur de la chambre 3.

De façon connue, le dispositif comprend une ouverture, non représentée, communiquant entre l'intérieur et l'extérieur de la chambre 3, et adaptée pour laisser passer l'air entre l'intérieur de la chambre 3 et l'extérieur, tout en étant étanche à l'encontre de la pénétration d'éléments solides ou liquides tels que l'eau, la poussière, la boue, etc.. Cette ouverture permet également une régulation de la pression interne à l'intérieur de la chambre 3, afin d'éviter une augmentation trop important celle-ci susceptible d'être provoquée par la chaleur dégagée par le système optique.

En outre, dans l'exemple particulier décrit ici, le dispositif est doté d'un élément de déshumidification, non représenté, adapté pour extraire l'humidité de l'air avant que celui-ci ne pénètre dans la chambre par l'ouverture. Cet élément de déshumidification peut être analogue à celui décrit dans le document EP2306084.

De façon complémentaire ou alternative, le dispositif peut également être muni d'un élément de ventilation adapté pour établir une circulation d'air entre la chambre 3 et l'extérieur de manière à renouveler l'air dans la chambre 3 et éviter une accumulation d'humidité à l'intérieur de la chambre 3.

Le module de déshumidification et/ou l'élément de ventilation permettent de réduire l'humidité de l'air à l'intérieur de la chambre 3.

Le boîtier 1 comprend deux parois de fond 10, 11 et deux parois latérales (non représentées), réalisées en matériau polymère. Dans l'exemple particulier décrit ici, le matériau polymère utilisé pour réaliser les parois du boîtier 1 est du PP TD 40, c'est-à-dire du polypropylène homopolymère chargé à 40% de talc. On pourrait envisager d'utiliser un autre matériau polymère pour les parois du boîtier 1 telque l'un des matériaux suivants, pris seul ou sous forme d'un alliage, le cas échéant chargé : polyuréthane (PU), polyamide (PA), polyester (PE), polypropylène (PP), acrylonitrile butadiène styrène (ABS), polycarbonate (PC).

Les surfaces internes des parois du boîtier 1, c'est-à-dire celles qui sont orientées vers l'intérieur de la chambre 3, sont chacune munies d'une couche étanche 5 formant barrière à l'encontre du passage de molécules d'eau vers l'intérieur de la chambre 3. La couche étanche 5 d'une paroi est ici constituée d'un matériau étanche à l'eau déposé sur la surface interne de la paroi. Elle est intercalée directement entre le matériau polymère constituant la paroi de boîtier 1 et l'intérieur de la chambre 3. Ainsi, la couche étanche 5 présente une surface en contact avec l'intérieur de la chambre 3 et une surface commune avec la paroi de boîtier 1.

On rappelle ici que les parois du boîtier 1, réalisées en matériau polymère, présentent une certaine porosité, ou perméabilité, notamment vis-à-vis de l'eau. A titre d'exemple illustratif, une paroi en polyamide est susceptible d'absorber entre 4 à 10 % de son poids en eau. Les parois du boîtier 1 agissent comme des éponges : elles absorbent des molécules d'eau provenant de l'humidité de l'air, intérieur ou extérieur, en contact avec les parois et libèrent ultérieurement cette eau, sous certaines conditions de température, de pression et d'humidité ambiantes. La couche étanche 5 dont est munie chaque face interne de paroi du boîtier 1 joue un rôle de barrière empêchant l'eau absorbée par les parois de ressortir vers l'intérieur du boîtier 1, autrement dit dans la chambre 3, et la forçant à ressortir vers l'extérieur.

Selon une variante non couverte par l'invention, la couche étanche 5 présente une épaisseur de quelques dizaines de nanomètres, par exemple comprise entre 25 et 80 nm, de préférence entre 60 et 80 nm. Elle est réalisée par une technique de dépôt chimique en phase vapeur assisté par plasma (ou PECVD, pour *Plasma-Enhanced Chemical Vapor Deposition* en anglais), selon le procédé de traitement non couvert par l'invention qui va maintenant être décrit. Ce traitement est réalisé durant le procédé de fabrication du dispositif d'éclairage et/ou de projection.

Lors d'une première étape, les zones du boîtier 1 à ne pas traiter, ici les faces externes du boîtier 1, sont recouvertes à l'aide d'un cache en inox.

Lors d'une deuxième étape, le boîtier 1 est placé dans une chambre d'un équipement de PECVD, sur un support cylindrique rotatif.

L'équipement de PECVD comprend, de façon connue, un système d'injection de gaz dans la chambre et des électrodes. Celles-ci sont ici alimentées par un générateur MF de fréquence moyenne fonctionnant à une puissance de 10KW et apte à générer une fréquence de 10 à 100 kHz, préférentiellement 40kHz.

Lors d'une troisième étape, on réalise le dépôt de la couche étanche 5 sur les faces internes des parois du boîtier 1, en faisant fonctionner l'équipement de PECVD, pendant une durée de traitement donnée, avec les paramètres de fonctionnement suivants:
- pression à l'intérieur de la chambre de l'équipement de l'ordre de 5.10⁻² mbar;
- injection dans la chambre, sous forme de gaz, de l'hexaméthylène disiloxane à un débit compris entre 20 et 80 sccm (centimètre cube standard par minute, de *"standard cubic centimeter per minute"* en l'anglais) et de l'oxygène à un débit de 80 sccm;
- application d'une puissance de 4 kW aux électrodes;
- entraînement en rotation du support de la pièce à traiter à une vitesse de 20 tours par minute.

La durée du traitement est par exemple de 60 secondes.

La couche de revêtement ainsi obtenue est un composé polysiloxane et présente une épaisseur de 60 à 80 nm et une très faible perméabilité à la vapeur d'eau P(STP), telle que définie par la norme ISO 15 106-3, égale à 0,001 g.mm/m².24h. Le polymère PP TD 40 présente quant à lui une perméabilité à la vapeur d'eau P(STP) égale à 1 g.mm/m².24h.

Les valeurs des paramètres de fonctionnement indiquées ci-dessus sont données à titre d'exemple illustratif et non limitatif. Ils peuvent varier dans une certaine mesure permettant de réaliser une couche de revêtement étanche à l'encontre du passage de molécules d'eau présentant une épaisseur inférieure ou égale à 120 nm, préférentiellement 80 nm et de préférence supérieure ou égale à 1 nm , préférentiellement 10 nm, plus préférentiellement 20 nm.

À la place de l'hexaméthylène disiloxane, on pourrait utiliser un autre composé, notamment un autre polysiloxane tel que le tétraméthyl disiloxane ou des dérivés d'hydrocarbures (méthane, éthane, éthylène).

Selon l'invention, chaque paroi de boîtier 1 est munie d'une couche étanche 5 constituée par une couche surfacique de la paroi elle-même, traitée par voie physique, chimique ou physicochimique, de manière à être rendue étanche. Le traitement est appliqué sur la face interne de chaque paroi et a pour effet de modifier les propriétés physiques du matériau polymère, sur une épaisseur donnée du matériau, de manière à le rendre étanche à l'encontre du passage de l'eau. Le matériau polymère est ainsi réticulé par bombardement ionique de la surface interne de la paroi. La couche surfacique étanche obtenue présente une épaisseur de l'ordre d'une à quelques dizaines jusqu'à quelques centaines de nanomètres. Cette couche surfacique étanche est en contact avec l'intérieur de la chambre 3 par sa surface interne qui est commune avec la surface interne de la paroi.

Pour réaliser une couche surfacique étanche sur une paroi du boîtier 1, on peut utiliser le même équipement de PECVD équipé d'une unité de traitement par faisceaux d'ions. Lors du traitement, la pression à l'intérieur de la chambre est réglée à environ 5.10⁻² mbar. Les ions utilisés pour le traitement sont par exemple des ions d'azote monochargé N+ ayant une énergie de 35 keV. La durée de traitement est par exemple de 20 secondes. Le traitement consiste à bombarder de faisceaux d'ions N+ la face interne de chaque paroi du boîtier 1, pendant une durée de 20 secondes, de manière à obtenir une couche surfacique étanche. La perméabilité P(STP) de la couche de polymère PP TD 40 traitée par bombardement ionique est égale à 0,01 g.mm/m².24h. Les paramètres de fonctionnement de l'équipement de PECVD pour le bombardement ionique des faces internes du boîtier, indiqués ci-dessus, sont donnés à titre purement illustratif et non limitatif. Ils peuvent varier dans une certaine mesure de manière à former une couche surfacique étanche d'une épaisseur comprise entre 10 et 2000 nm notamment.

Sur la figure 2, on a représenté un deuxième exemple de réalisation d'un dispositif d'éclairage et/ou de projection de véhicule automobile.

Le dispositif d'éclairage et/ou de signalisation représenté sur cette figure 2 comprend un boîtier 1, fermé par une glace frontale 2, une chambre interne 3 définie par l'espace intérieur clos délimité par le boîtier 1 et par la glace 2, et un système optique 4 logé à l'intérieur de la chambre 3. Le système optique 4 comprend ici des diodes montées sur des barrettes supports.

Le dispositif comprend également, à l'intérieur de la chambre 3, des tuyaux de refroidissement 6, à travers lesquels un fluide de refroidissement, par exemple de l'eau, circule. Les tuyaux 6 sont reliés à un bloc externe, à travers une paroi du boîtier 1. Le bloc externe comporte une pompe pour faire circuler le fluide de refroidissement en circuit fermé et un élément de refroidissement du fluide.

Les tuyaux sont réalisés en un matériau polymère tel que par exemple en polyuréthane, polyamide, polyester ou polypropylène. La surface externe des tuyaux, dirigée vers l'intérieur de la chambre 3, est munie d'une couche étanche à l'encontre du passage de molécules d'eau vers l'intérieur de la chambre 3. Cette couche étanche est réalisée par bombardement ionique permettant de modifier une couche surfacique de la paroi du tuyau et la rendre étanche, comme précédemment décrit.

De manière générale, toute pièce en matériau polymère située à l'intérieur de la chambre 3 du boîtier 1 est munie, sur une surface dirigée vers l'intérieur de la chambre, d'une couche étanche formant barrière au passage de molécules d'eau vers l'intérieur de la chambre. La couche étanche est en contact avec l'intérieur de la chambre et la surface de la pièce en matériau polymère orientée vers l'intérieur de la chambre constitue une surface commune à la pièce en matériau polymère et à la couche étanche. Cette couche étanche est réalisée par bombardement ionique de la surface de la pièce orientée vers l'intérieur de la chambre.

## Revendications

1. Dispositif d'éclairage et/ou de signalisation pour véhicule automobile, comportant une chambre interne (3) logeant un système optique (4) et au moins un élément (1,6) en matériau polymère ayant une surface orientée vers l'intérieur de la chambre (3), ladite surface orientée vers l'intérieur de la chambre est munie d'une couche étanche (5) formant barrière à l'encontre du passage de molécules d'eau vers l'intérieur de la chambre (3) **caractérisé en ce que** la couche étanche est une couche surfacique de l'élément (1,6) en matériau polymère, réticulée par bombardement ionique, de manière à être rendue étanche à l'encontre du passage de molécules d'eau.

2. Dispositif selon la revendication 1, **caractérisé en ce que** ladite couche étanche est en contact avec l'intérieur de la chambre (3) et la surface de l'élément en matériau polymère (1,6) orientée vers l'intérieur de la chambre constitue une surface commune à l'élément en matériau polymère et à la couche étanche.

3. Dispositif selon l'une des revendications 1 et 2, **caractérisé en ce que** l'élément en matériau polymère est une paroi d'un boîtier (1) délimitant la chambre (3).

4. Dispositif selon l'une des revendications 1 à 3, **caractérisé en ce que** l'élément en matériau polymère est un tuyau (6) de circulation d'un liquide de refroidissement.

5. Dispositif selon l'une des revendications précédentes, **caractérisé en ce qu'**il comprend un élément de déshumidification adapté pour extraire l'humidité de l'air avant que celui-ci ne pénètre dans la chambre par une ouverture communiquant entre l'intérieur de la chambre et l'extérieur.

6. Dispositif selon l'une des revendications précédentes, **caractérisé en ce qu'**il comprend un élément de ventilation adapté pour faire circuler l'air entre l'intérieur de la chambre et l'extérieur.

7. Procédé de fabrication d'un dispositif d'éclairage et/ou de signalisation pour véhicule automobile, comportant une chambre interne (3) logeant un système optique (4) et au moins un élément en matériau polymère (1,6) présentant une surface orientée vers l'intérieur de la chambre (3), comprenant une étape de traitement de la surface orientée vers l'intérieur de la chambre (3) pour réaliser une couche étanche (5) formant barrière à l'encontre du passage de molécules d'eau vers l'intérieur de la chambre, **caractérisé en ce que** l'étape de traitement comprend un bombardement ionique de la surface de l'élément en matériau polymère orientée vers l'intérieur de la chambre (3) afin de réaliser une couche surfacique étanche dans l'élément en matériau polymère (1,6).

## Patentansprüche

1. Beleuchtungs- und/oder Signalisierungsvorrichtung für ein Kraftfahrzeug, die eine innere Kammer (3), die ein optisches System (4) aufnimmt, und mindestens ein Element (1, 6) aus Polymermaterial, das eine zum Innenraum der Kammer (3) hin ausgerichtete Oberfläche hat, beinhaltet, wobei die zum Innenraum der Kammer hin ausgerichtete Oberfläche mit einer dichten Schicht (5) versehen ist, die eine Barriere gegenüber dem Durchgang von Wassermolekülen zum Innenraum der Kammer (3) hin bildet, **dadurch gekennzeichnet, dass** die dichte Schicht eine flächige Schicht des Elements (1, 6) aus Polymermaterial ist, die durch Ionenbeschuss vernetzt wurde, so dass sie gegenüber dem Durchgang von Wassermolekülen abgedichtet worden ist.

2. Vorrichtung nach Anspruch 1, **dadurch gekennzeichnet, dass** die dichte Schicht in Kontakt mit dem Innenraum der Kammer (3) ist und das zum Innenraum der Kammer hin ausgerichtete Element aus Polymermaterial (1, 6) eine gemeinsame Oberfläche des Elements aus Polymermaterial und der dichten Schicht bildet.

3. Vorrichtung nach einem der Ansprüche 1 und 2, **dadurch gekennzeichnet, dass** das Element aus Polymermaterial eine Wand eines Gehäuses (1) ist, das die Kammer (3) begrenzt.

4. Vorrichtung nach einem der Ansprüche 1 bis 3, **dadurch gekennzeichnet, dass** das Element aus Polymermaterial ein Schlauch (6) zur Zirkulation einer Kühlflüssigkeit ist.

5. Vorrichtung nach einem der vorhergehenden Ansprüche, **dadurch gekennzeichnet, dass** sie ein Entfeuchtungselement umfasst, das dazu geeignet, ist, die Feuchtigkeit aus der Luft zu entziehen, bevor diese durch eine verbindende Öffnung zwischen dem Innenraum der Kammer und dem Außenraum in die Kammer eindringt.

6. Vorrichtung nach einem der vorhergehenden Ansprüche, **dadurch gekennzeichnet, dass** sie ein Belüftungselement umfasst, das dazu geeignet, ist, die Luft zwischen dem Innenraum der Kammer und dem Außenraum zirkulieren zu lassen.

7. Verfahren zur Herstellung einer Beleuchtungs- und/oder Signalisierungsvorrichtung für ein Kraftfahrzeug, die eine innere Kammer (3), die ein optisches System (4) aufnimmt, und mindestens ein Element aus Polymermaterial (1, 6), das eine zum Innenraum der Kammer (3) hin ausgerichtete Oberfläche aufweist, beinhaltet, umfassend einen Schritt des Behandelns der zum Innenraum der Kammer (3) hin ausgerichteten Oberfläche, um eine dichte Schicht (5) auszuführen, die eine Barriere gegenüber dem Durchgang von Wassermolekülen zum Innenraum der Kammer hin bildet, **dadurch gekennzeichnet, dass** der Behandlungsschritt einen Ionenbeschuss der zum Innenraum der Kammer (3) hin ausgerichteten Oberfläche des Elements aus Polymermaterial umfasst, um eine dichte flächige Schicht in dem Element aus Polymermaterial (1, 6) auszuführen.

## Claims

1. Lighting and/or signalling device for a motor vehicle, having an internal chamber (3) accommodating an optical system (4) and at least one element (1, 6) made of polymer material having a surface oriented towards the interior of the chamber (3), said surface oriented towards the interior of the chamber is equipped with a sealed layer (5) forming a barrier to the passage of water molecules towards the interior of the chamber (3), **characterized in that** the sealed layer is a surface layer of the element (1, 6) made of polymer material, said surface layer being crosslinked by ion bombardment, so as to be sealed against the passage of water molecules.

2. Device according to Claim 1, **characterized in that** said sealed layer is in contact with the interior of the chamber (3), and that surface of the element (1, 6) made of polymer material which is oriented towards the interior of the chamber constitutes a surface common to the element made of polymer material and to the sealed layer.

3. Device according to one of Claims 1 and 2, **characterized in that** the element made of polymer material is a wall of a housing (1) delimiting the chamber (3).

4. Device according to one of Claims 1 to 3, **characterized in that** the element made of polymer material is a pipe (6) for the circulation of a cooling liquid.

5. Device according to one of the preceding claims, **characterized in that** it comprises a dehumidification element designed to extract the moisture from the air before the latter penetrates the chamber through an opening communicating between the interior of the chamber and the exterior.

6. Device according to one of the preceding claims, **characterized in that** it comprises a ventilation element designed to make the air circulate between the interior of the chamber and the exterior.

7. Method for manufacturing a lighting and/or signalling device for a motor vehicle, having an internal chamber (3) accommodating an optical system (4) and at least one element (1, 6) made of polymer material having a surface oriented towards the interior of the chamber (3), comprising a step of treating the surface oriented towards the interior of the chamber (3) so as to produce a sealed layer (5) forming a barrier to the passage of water molecules towards the interior of the chamber, **characterized in that** the treatment step comprises an ion bombardment of that surface of the element made of polymer material which is oriented towards the interior of the chamber (3) in order to produce a sealed surface layer in the element (1, 6) made of polymer material.
